# DEMANDE DE BREVET EUROPEEN

(11) **EP 2 693 052 A1**
(43) Date de publication de la demande: **05.02.2014**
(21) Numéro de dépôt: 13177968.8
(22) Date de dépôt: 25.07.2013
(51) Int. Cl.: F04B 43/04, F16K 99/00

(54) **Pompe réalisée dans un substrat**

(30) Priorité: 31.07.2012 FR 1257411
(71) Demandeur: Commissariat à l'Énergie Atomique et aux Énergies Alternatives, 75015 Paris (FR)
(72) Inventeur: Nicolas, Stephane, 38240 Meylan (FR)
(74) Mandataire: Colombo, Michel

(57) **Abrégé**

Pompe comportant: une cavité formée dans un premier substrat (4); des canaux (22, 26) d'admission et d'évacuation d'un fluide, formés dans une face supérieure du premier substrat, chacun de ces canaux s'étendant parallèlement au plan du substrat; un second substrat coll'e sur la face supérieure du premier substrat et refermant la cavité pour former une chambre étanche (24) au fluide; une membrane (44) formant une paroi de la chambre étanche (24) au fluide, cette membrane étant déformable; un premier et un second clapets anti-retours (50, 60) formés dans la face supérieure du premier substrat, chaque clapet anti-retour comportant un côté proximal ancré sans aucun degré de liberté au premier substrat, le côté proximal du premier clapet (50) étant situé entre des orifices d'entrée (30) et de sortie (32) du canal d'admission (22), et le côté proximal du second clapet (60) étant situé entre des orifices d'entrée (36) et de sortie (38) du canal d'évacuation (26).

## Description

L'invention concerne une pompe réalisée dans un substrat ainsi qu'un procédé de fabrication de cette pompe.

En particulier, l'invention concerne notamment des micropompes, c'est-à-dire des pompes qui sont des microsystèmes.

Les microsystèmes sont, par exemple, des MEMS (Micro-ElectroMechanical Systems). Ces microsystèmes diffèrent des systèmes mécaniques macroscopiques en outre par leur procédé de fabrication. Ces microsystèmes sont réalisés en utilisant les mêmes procédés de fabrication collectifs que ceux utilisés pour réaliser les puces microélectroniques. Par exemple, les microsystèmes sont réalisés à partir de plaquette en silicium monocristallin ou en verre usinées par photolithographie et gravure (par exemple DRIE (Deep Reactive Ion Etching)) et/ou structurées par croissance épitaxiale et dépôt de matériau métallique.

Grâce à ces procédés de fabrication, les microsystèmes sont petits et présentent généralement des pièces ou parties de pièces usinées dont au moins une des dimensions est d'ordre micrométrique. La dimension d'ordre micrométrique est généralement inférieure à 200 µm et, par exemple, comprise entre 1 et 200 µm.

Les pompes connues comportent :
- un premier substrat s'étendant essentiellement dans un plan appelé « plan du substrat »,
- une cavité formée dans une face supérieure du premier substrat et délimitée sur les côtés par des parois latérales fixes,
- des canaux, d'admission et d'évacuation d'un fluide, formés dans le premier substrat, chacun de ces canaux s'étendant parallèlement au plan du substrat d'un orifice d'entrée jusqu'à un orifice de sortie, l'orifice de sortie du canal d'admission et l'orifice d'entrée du canal d'évacuation débouchant directement dans la cavité au niveau des parois latérales fixe,
- une membrane refermant la cavité pour former une chambre étanche au fluide, cette membrane étant déformable :
   - d'une position d'aspiration jusqu'à une position de refoulement pour refouler le fluide à l'extérieur de la chambre par l'intermédiaire du canal d'évacuation, et
   - de la position de refoulement jusqu'à la position d'aspiration pour aspirer le fluide à l'intérieur de la chambre par l'intermédiaire du canal d'admission,
- un premier et un second clapets anti-retours, chaque clapet anti-retour comportant un côté proximal ancré sans aucun degré de liberté au premier substrat.

Par substrat s'étendant essentiellement dans un plan on désigne aussi bien des substrats plans que des substrats présentant de légers défauts de planéité tel qu'un substrat légèrement courbé ou une surface irrégulière.

Par exemple, une telle pompe est décrite dans le document A1 suivant : WO 2011 133 014 A1.

Cette pompe connue présente l'avantage d'être simple à fabriquer car les canaux d'admission et d'évacuation, la cavité et les clapets se situent dans un même plan et peuvent donc être simplement réalisés par gravure d'une même face supérieure du premier substrat. Ainsi, de par la disposition de ces éléments, le nombre de substrats à empiler les uns au-dessus des autres pour fabriquer la pompe de A1 est limité. En particulier, le nombre de substrats à empiler est inférieur à celui requis pour réaliser d'autres pompes telles que la pompe décrite dans la demande WO 2007 128 705 A1.

Bien que la pompe de A1 fonctionne correctement, cette configuration est susceptible d'entraîner une détérioration de la membrane et /ou des clapets voire le dysfonctionnement des clapets anti-retours.

De l'état de la technique est également connu de :
- US5816780A,
- EP 0 398 583 A2,
- Wijngraad Van Der W et Al : « The first self-priming and bi-directional valve-less diffuser micropump for both liquid and gas », Proceedings of IEEE 13th annual international conference on micro-electro-mechnical systems, MEMS 2000, Miyazaki, Japan, January 23-27, 2000, pages 674-679.

L'invention vise donc à améliorer la pompe de A1 pour remédier à ces dysfonctionnements tout en conservant sa simplicité de fabrication.

Elle a donc pour objet une pompe conforme à la revendication 1.

Il a été découvert qu'au moins une partie des dysfonctionnements de la pompe de A1 provenait du fait que, de temps en temps, lorsque la membrane se déplace vers sa position de refoulement, elle vient en contact avec les clapets. Ce contact peut bloquer le clapet et empêcher son déplacement vers sa position fermée ou endommager le clapet ou la membrane.

Dans la pompe ci-dessus, les clapets sont situés à l'intérieur des canaux d'admission et d'évacuation. Ils ne peuvent donc plus être bloqués ou endommagés par le déplacement de la membrane. Le fonctionnement de la pompe est donc amélioré.

De plus, la face latérale des clapets n'a plus besoin d'être beaucoup plus grande que la section transversale des orifices d'entrée et de sortie à obstruer. Ceci facilite leur fabrication et diminue également les pertes de charge ainsi que le volume des espaces morts à l'intérieur de la chambre.

Par ailleurs, les clapets selon l'invention sont actionnés par la différence de pression entre l'amont et l'aval de chaque clapet qui de ce fait peuvent fonctionner même sans actionneur mécanique. Cependant, l'invention peut utiliser de tels actionneurs mécaniques notamment pour permettre un contrôle dynamique des clapets.

Les modes de réalisation de cette pompe peuvent comporter une ou plusieurs des caractéristiques des revendications dépendantes.

Ces modes de réalisation présentent en outre les avantages suivants :
- la présence d'un épaulement sur lequel vient reposer la périphérie libre du clapet dans sa position fermée permet de limiter les fuites dans le sens inverse au sens prévu d'écoulement du fluide ;
- utiliser un clapet flexible permet d'obtenir un clapet anti-retour uniquement actionné par la différence de pression dans le fluide entre l'amont et l'aval du clapet ;
- disposer l'orifice de sortie du canal d'admission en vis-à-vis de l'orifice d'entrée du canal d'évacuation permet de décroître les pertes de charge ;
- réaliser la membrane dans un second substrat collé sur le premier substrat permet de faciliter la fabrication de cette pompe ;
- le fait d'avoir le côté proximal du clapet parallèle au plan du premier substrat facilite la fabrication du clapet.

L'invention a également pour objet un procédé de fabrication de la pompe ci-dessus conforme à la revendication 11.

Les modes de réalisation de ce procédé peuvent comporter une ou plusieurs des caractéristiques des revendications dépendantes.

L'invention sera mieux comprise à la lecture de la description qui va suivre, donnée uniquement à titre d'exemple non limitatif et faite en se référant aux dessins sur lesquels :
- la figure 1 est une illustration schématique d'une pompe en coupe verticale ;
- la figure 2 est une illustration schématique en vue de dessus d'un premier substrat de la pompe de la figure 1 ;
- la figure 3 est un organigramme d'un procédé de fabrication de la pompe de la figure 1 ;
- les figures 4 à 10, 12 à 16 et 18 sont des illustrations schématiques, en coupe verticale, de différentes étapes de fabrication de la pompe de la figure 1 ;
- les figures 11 et 17 sont des illustrations schématiques, en vue de dessus, de substrats fabriqués lors de la mise en oeuvre du procédé de la figure 3.

Dans ces figures, les mêmes références sont utilisées pour désigner les mêmes éléments.

Dans la suite de cette description, les caractéristiques et fonctions bien connues de l'homme du métier ne sont pas décrites en détail.

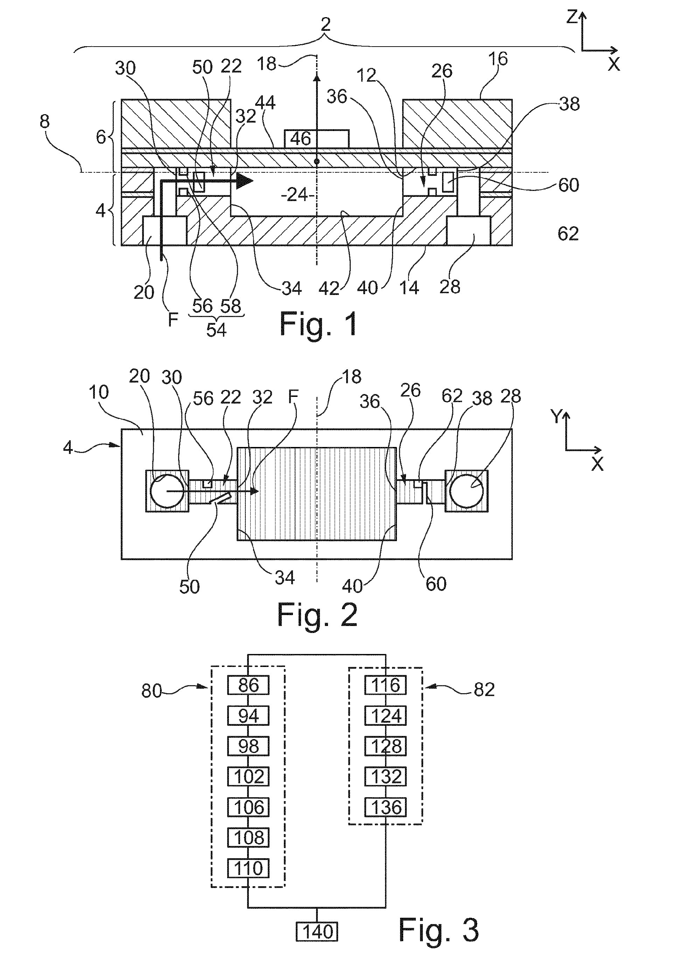

La figure 1 représente une pompe 2 de type planaire, c'est-à-dire dont les principaux éléments de la pompe sont situés dans un même plan parallèle à une face d'un même substrat. Cette pompe 2 est conçue pour permettre de pomper un volume très précis d'un fluide. Le fluide peut être un liquide tel que de l'eau ou une solution à injecter. Le fluide peut également être un gaz. Le sens d'écoulement du fluide à l'intérieur de la pompe est indiqué par une flèche F. Dans la suite de la description, l'amont et l'aval sont définis par rapport à la direction d'écoulement F.

La pompe 2 est ici un microsystème et peut donc être appelée micropompe. Typiquement, la plus grande largeur de la pompe est inférieure à 2 ou 1 cm. Cette plus grande largeur est généralement supérieure à 1 mm.

La pompe 2 est réalisée à partir de seulement deux substrats 4 et 6 collés l'un au-dessus de l'autre. L'interface 8 de collage entre ces deux substrats 4 et 6 est présentée par un axe sur la figure 1. Cette interface 8 de collage s'étend dans un plan horizontal parallèle à des directions X et Y orthogonales entre elles. Une direction Z orthogonale aux directions X et Y représente la direction verticale. Par la suite, les termes « supérieur », « inférieur », « au-dessus » et « au-dessous » sont définis par rapport à cette direction Z.

Le substrat 6 est au-dessus du substrat 4. Le substrat 4 comporte :
- une face supérieure horizontale 10 (figure 2) tournée vers une face inférieure horizontale 12 du substrat 6, et
- une face inférieure horizontale 14 du côté opposé à la face 10.

Le substrat 6 comporte également une face supérieure horizontale 16 du côté opposé à sa face inférieure 12.

Les différentes couches formant chacun de ces substrats seront décrites plus en détail en référence au procédé de la figure 3. La figure 2 représente une vue de dessus de la pompe 2 lorsque le substrat 6 est omis.

La suite de la description de la pompe 2 est faite en référence à ces deux figures 1 et 2.

La pompe 2 présente un plan vertical 18 de coupe. Ici, ce plan 18 est parallèle aux directions Y et Z. Par la suite, seules les éléments de la pompe 2 dans la partie gauche de ce plan 18 sont décrits en détail.

Le substrat 4 comporte successivement dans le sens F d'écoulement du fluide :
- un trou vertical 20 traversant de part en part le substrat 4,
- un canal rectiligne 22 d'admission du fluide,
- une chambre étanche 24,
- un canal 26 rectiligne d'évacuation du fluide, et
- un autre trou vertical 28 traversant de part en part le substrat 4.

Une extrémité du trou 20 débouche dans la face inférieure 14. Ici, cette extrémité est évasée pour recevoir, par exemple, un manchon qui permet de raccorder la pompe 2 à la sortie d'un circuit fluidique.

L'extrémité opposée du trou 20 débouche dans la face supérieure 10. Cette extrémité est bouchée par la face inférieure 12 du substrat 6.

Le trou 28 est le symétrique du trou 20 par rapport au plan 18.

Le canal 22 s'étend horizontalement parallèlement à la direction X. Il s'étend d'un orifice 30 d'entrée jusqu'à un orifice 32 de sortie. L'orifice 30 débouche dans une paroi verticale du trou 20. L'orifice 32 débouche dans une paroi verticale 34 de la chambre 24.

La section transversale du canal 22 est par exemple rectangulaire. La paroi supérieure du canal 22 est ici formée par la face inférieure 12 du substrat 6.

Le canal 26 est le symétrique du canal 22 par rapport au plan 18. Il s'étend d'un orifice 36 d'entrée jusqu'à un orifice 38 de sortie. Les orifices 36 et 38 débouchent, respectivement, dans une paroi verticale 40 de la chambre 24 et dans le trou 28. La paroi 40 est le symétrique de la paroi 34 par rapport au plan 18.

La chambre 24 s'étend de part et d'autre du plan 18. Ici, cette chambre 24 est un parallélépipède qui s'étend principalement horizontalement. La chambre 24 définit un espace creux formé par la réunion :
- d'une cavité creusée dans la face supérieure 10 du substrat 4, et
- d'une membrane mobile 44 réalisée dans le substrat 6.

La cavité est délimitée dans le substrat 4 par des parois verticales, dont notamment les parois 34 et 40, et par une paroi horizontale 42 également appelée fond de la cavité.

Les parois verticales et le fond de la cavité ne forment qu'un seul bloc de matière avec le substrat 4 et sont fixes.

L'ouverture de cette cavité débouche dans la face supérieure 10.

Ici, l'intérieur de la chambre 24 est vide, c'est-à-dire notamment dépourvu de clapet anti-retour.

La membrane 44 recouvre la totalité de l'ouverture de la cavité pour former la chambre étanche 24. La chambre 24 est étanche au fluide pompé.

La membrane 44 se déforme élastiquement entre une position d'aspiration et une position de refoulement. Quand elle se déplace de la position de refoulement vers sa position d'aspiration, elle aspire le fluide à l'intérieur de la chambre 24 par l'intermédiaire du canal 22. Quand elle se déplace de sa position d'aspiration vers sa position de refoulement, elle refoule le fluide de l'intérieur de la chambre 24 vers l'extérieur par l'intermédiaire du canal 26.

Sur la figure 1, la membrane 44 est représentée dans une position de repos. Dans cette position de repos, elle s'étend horizontalement.

Dans ce mode de réalisation, dans la position d'aspiration, la membrane 44 est incurvée à l'intérieur du substrat 6. Dans cette position, le sommet de la membrane 44 est en retrait à l'intérieur du substrat 6 par rapport à son emplacement dans la position de repos de la membrane.

Dans la position de refoulement, la membrane 44 est incurvée à l'intérieur de la cavité formée dans le substrat 4. Le sommet de la membrane 44 est alors situé à l'intérieur de la cavité du substrat 4. Ce déplacement de la membrane de part et d'autre de sa position de repos permet de maximiser le volume pompé et donc d'augmenter la cylindré de la pompe.

Ici, la membrane 44 ne forme qu'un seul bloc de matière avec le substrat 6. Sa périphérie est donc fixée sans aucun degré de liberté au reste du substrat 6.

La pompe 2 comporte également un actionneur 46 capable de transformer l'énergie qu'il reçoit en un déplacement de la membrane 4 entre ses positions d'aspiration et de refoulement. Par exemple, l'actionneur 46 est un actionneur conventionnel tel qu'un actionneur électrostatique ou un actionneur piézoélectrique ou un actionneur bimétallique, tel qu'un bilame, ou un actionneur à mémoire de forme ou un actionneur thermo-pneumatique.

Dans certain cas, l'actionneur est confondu en partie ou en totalité avec la membrane 44. C'est le cas, lorsque la membrane 44 est réalisée dans un matériau piézoélectrique ou par un complexe bicouche dans lequel chaque couche a un coefficient de dilatation différent de l'autre pour former un bilame. L'énergie reçue par l'actionneur peut être de l'énergie électrique ou de l'énergie thermique. L'énergie thermique est par exemple utilisée lorsque l'actionneur comporte le complexe bimétallique. Bien entendu, l'actionneur selon l'invention peut également être un dispositif externe à la membrane et relié à celle-ci par un élément mécanique d'accrochage

Le canal 22 comprend un clapet anti-retour 50 apte à empêcher ou à limiter la circulation du fluide dans le sens opposé à la direction F. Ce clapet 50 est situé en amont de l'orifice 32 et en aval de l'orifice 30 à l'intérieur du canal 22. Il est déplaçable entre une position ouverte et une position fermée. Dans la position ouverte, il laisse circuler plus facilement le fluide dans la direction F que dans sa position fermée. Dans sa position fermée, il empêche l'écoulement du fluide en sens inverse de la direction F. Ici, dans sa position fermée, le clapet 50 s'étend parallèlement au plan 18. Dans sa position ouverte, représentée sur les figures 1 et 2, le clapet 50 est incliné vers l'aval.

Le clapet 50 est une lame flexible de même section transversale que la section transversale du canal 22 mais de dimension légèrement plus petite. Ici, le clapet 50 a donc une section transversale rectangulaire. La hauteur de ce clapet h_{c} dans la direction Z et sa largeur L_{c} dans la direction Y sont inférieures, par exemple d'au moins 0,1 µm ou 1 µm, respectivement, à la hauteur et à la largeur du canal 22 selon les mêmes directions.

Le clapet 50 se déplace entre ses positions ouverte et fermée par rotation autour d'un axe solidaire du substrat 4. A cet effet, un côté proximal du clapet 50 est ancré sans aucun degré de liberté à l'une des parois du canal 22. Ici, ce côté proximal est ancré sur une paroi verticale du canal 22. Ainsi, le clapet 50 ne forme qu'un seul bloc de matière avec le substrat 4.

Le clapet 50 est flexible pour se déformer élastiquement entre ses positions ouverte et fermée uniquement sous l'action du fluide qui s'écoule. A cet effet, l'épaisseur e_{c} du clapet 50 est au moins cinq ou dix fois inférieure à sa largeur L_{c} ou à sa hauteur h_{c}. Typiquement, la largeur L_{c} et la hauteur h_{c} sont supérieures à 50 ou 100 µm. Par conséquent, typiquement, l'épaisseur du clapet 50 est inférieure à 10 µm ou 5 µm.

Dans sa position de repos, c'est-à-dire en absence de différence de pressions entre l'amont et l'aval du clapet 50, celui-ci est dans une position de repos située, par exemple, entre sa position ouverte et sa position fermée.

Dans la position fermée, la périphérie libre du clapet 50 est séparée des parois du canal 22 et de la face inférieure 12 du substrat 6 par un jeu. Par exemple, ce jeu est supérieur ou égal à 0,1 ou 1 µm. La périphérie libre du clapet 50 correspond à la périphérie du clapet 50 moins son côté ancré.

Plus précisément, ici, la périphérie libre du clapet 50 est formée :
- d'un côté supérieur horizontal en vis-à-vis de la face inférieure 12,
- d'un côté inférieur horizontal en vis-à-vis du fond du canal 22, et
- d'un côté distal vertical situé du côté opposé et parallèle au côté proximal du clapet 50.

Dans ce mode de réalisation, pour supprimer presque totalement les fuites au moins durant le fonctionnement par l'intermédiaire de ce jeu, le canal 22 comporte un épaulement 54 sur lequel vient directement en appui mécanique la périphérie libre du clapet 50 lorsque celui-ci est dans sa position fermée. Cet épaulement obstrue quasiment la totalité du jeu lorsque le clapet 50 est dans sa position fermée. L'épaulement 54 est situé en amont du clapet 50.

Par exemple, l'épaulement 54 est formé par deux butées 56 et 58. Les butées 56 et 58 sont fixées, sans aucun degré de liberté, respectivement, aux substrats 4 et 6.

La butée 56 a ici une forme de « L ». La barre horizontale du « L » s'étend parallèlement à la direction Y sur toute la longueur du fond du canal 22. La barre verticale du « L » s'étend parallèlement à la direction Z le long de la paroi verticale du canal 22 en vis-à-vis de la paroi du canal 22 sur laquelle est ancré le côté proximal du clapet 50. Ici, la barre verticale du « L » s'étend sur au moins 80 % de la hauteur du canal 22.

Dans la position fermée, les côtés inférieur et distal du clapet 50 reposent mécaniquement sur, respectivement, les barres horizontale et verticale du « L » de la butée 56.

La butée 58 s'étend parallèlement à la direction Y le long de la face inférieure 12. Cette butée 58 est en vis-à-vis de la barre horizontale du « L » de la butée 56. Sa longueur est supérieure à 70 ou 80 % de la largeur du canal 22 dans la direction Y. Dans la position fermée, le côté supérieur du clapet 50 repose sur la butée 58.

Le canal 26 comporte un clapet anti-retour 60. Ce clapet anti-retour 60 est associé au clapet 50 de l'autre côté du plan 18. Dans les figures 1 et 2, il est représenté dans sa position fermée. Ce clapet 60 est réalisé de la même façon que le clapet 50.

Dans sa position fermée, la périphérie libre du clapet 60 vient directement en appui sur un épaulement 62 du canal 26 situé immédiatement en amont de ce clapet 60. L'épaulement 62 est par exemple identique à l'épaulement 54.

Le fonctionnement de la pompe 2 est le suivant. Initialement, les clapets 50 et 60 sont dans leur position de repos entre les positions ouverte et fermée. La membrane 44 est alors déplacée de sa position de repos jusqu'à sa position d'aspiration. Cela crée une dépression à l'intérieur de la chambre 24. La différence de pression qui existe alors entre l'amont et l'aval du clapet 50 provoque le déplacement de ce clapet 50 de sa position de repos jusqu'à sa position ouverte. Le fluide peut alors pénétrer à l'intérieur de la chambre 24 par l'intermédiaire du canal 22. A l'inverse, le clapet 60 passe de sa position de repos à sa position fermée à cause de l'épaulement 62. Ainsi, il empêche le fluide d'entrer à l'intérieur de la chambre 24 par l'intermédiaire du canal 26.

Quand la chambre 24 est remplie, la pression en amont et en aval du clapet 50 s'équilibre. Le clapet 50 passe de sa position ouverte à sa position de repos par déformation élastique.

Ensuite, la membrane 44 est déplacée de sa position d'aspiration vers sa position de refoulement. Cela crée une surpression à l'intérieur de la chambre 24. Le clapet 50 passe de sa position de repos à sa position fermée dans laquelle il est en butée contre l'épaulement 54. A l'inverse, la différence de pression entre l'amont et l'aval du clapet 60 provoque le déplacement de ce clapet 60 de sa position de repos vers sa position ouverte. Dans la position ouverte, il laisse le fluide s'échapper de l'intérieur de la chambre 24 vers le trou 28.

Quand la chambre 24 s'est vidée, au moins en partie, la pression entre l'amont et l'aval du clapet 60 s'équilibre. Le clapet 60 retourne alors, par déformation élastique, de sa position ouverte vers sa position de repos. Un nouveau cycle de pompage d'un nouveau volume du fluide peut alors commencer.

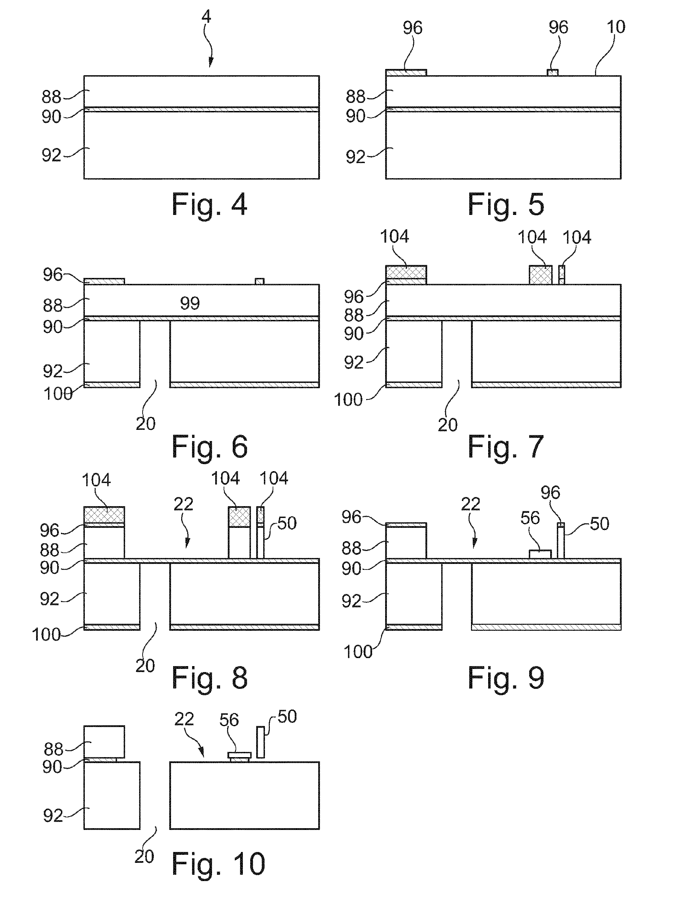

Un procédé de fabrication de la pompe 2 va maintenant être décrit en référence au procédé de la figure 3 et à l'aide des différentes vues des figures 4 à 18. Pour simplifier ces figures 4 à 18, sur chacune de ces figures, seule la partie à gauche du plan 18 a été représentée. De plus, le procédé de fabrication va maintenant être décrit dans le cas particulier où la profondeur de la chambre 24 est égale à la profondeur des canaux 22 et 26.

Le procédé de la figure 3 comporte deux phases 80 et 82 qui peuvent se dérouler en grande partie en parallèle.

La phase 80 est une phase de fabrication du substrat 4 tandis que la phase 82 est une phase de fabrication du substrat 6.

Au début de la phase 80, lors d'une étape 86, le substrat 4 est fourni. Ici, il s'agit d'un substrat BSOI (Bonded Silicone On Insulator). Le substrat 4 comporte une couche 88 (Figure 4) en silicium sur une couche 90 d'isolant électrique, elle-même directement disposée sur un support 92. La couche 88 présente une épaisseur comprise entre 10 et 200 µm. La couche 90 présente une épaisseur comprise entre 0,5 et 2 µm. Le support 92 qui est destiné à rigidifier le substrat présente à cet effet une épaisseur supérieure à 500 µm ou à 725 µm.

Ensuite, lors d'une étape 94, on procède au dépôt d'une couche d'oxyde sur la face supérieure. Par exemple, ce dépôt est réalisé par un dépôt chimique en phase vapeur assisté par plasma plus connue sous l'acronyme de PECVD (Plasma-Enhanced Chemical Vapor Deposition). Ensuite, on procède à une étape de lithographie puis de gravure de cette couche d'oxyde pour former un masque 96 (figure 5). La gravure est par exemple réalisée par gravure ionique réactive plus connue sous l'acronyme RIE (Reactive-Ion Etching).

Lors d'une étape 98, on dépose une couche d'oxyde sur la face inférieure du substrat 4. Par exemple, ce dépôt est réalisé selon le procédé PECVD. Ensuite, on procède à une lithographie suivie d'une gravure de cette couche pour former un masque 100 qui délimite l'emplacement du trou 20 (figure 6). Toujours lors de cette étape 98, on procède ensuite à la gravure de la face inférieure du substrat pour former une première partie du trou 20. Cette gravure est par exemple réalisée selon un procédé de gravure ionique réactive profonde plus connue sous l'acronyme de DRIE (Deep Reactive-Ion Etching).

Lors d'une étape 102, on procède à une étape de lithographie pour déposer un masque 104 en résine (figure 7). Ce masque 104 définit l'emplacement du clapet 50, du canal 22, de la chambre 24 et de la butée 56.

Lors d'une étape 106, on procède à la gravure de la face supérieure à travers le masque 104 (figure 8). Par exemple, cette gravure est réalisée selon le procédé DRIE en utilisant la couche 90 comme une couche d'arrêt. Cette gravure permet de former le canal 22, l'extrémité supérieure du trou 20, le clapet 50 ainsi que la cavité de la chambre 24.

Lors d'une étape 108, le masque 104 est enlevé (figure 9).

Ensuite, on procède à une gravure depuis la face supérieure en utilisant le masque 96. Cette gravure est par exemple réalisée selon le procédé DRIE. Cette gravure permet de former la butée 56.

Lors d'une étape 110, le clapet 50 est libéré en mettant en oeuvre une gravure HF en phase humide ou en phase vapeur (figure 10). Cette gravure permet également de retirer la couche 100 et de déboucher le trou 20.

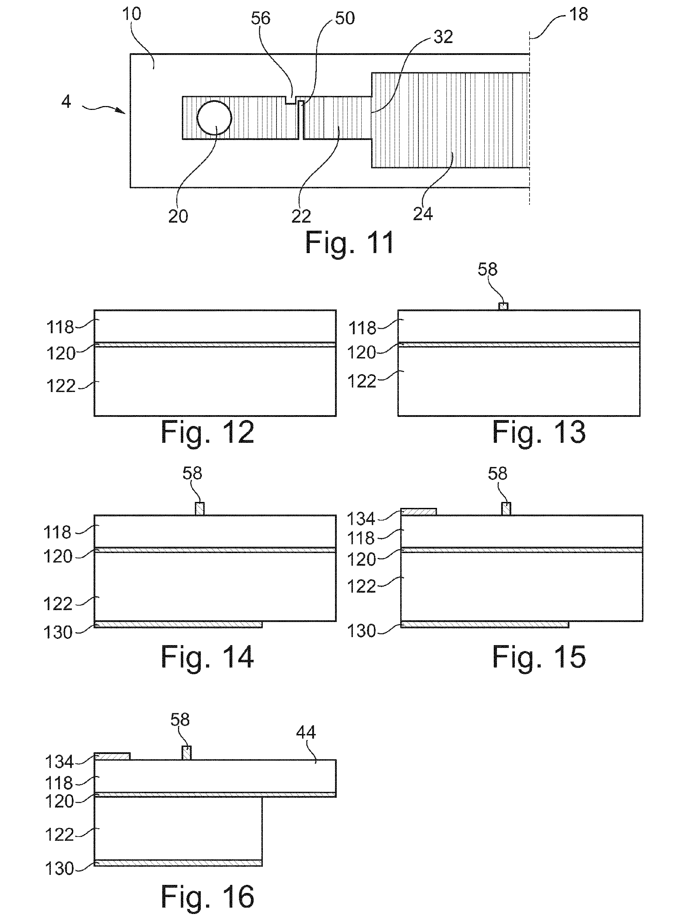

La figure 11 représente en vue de dessus la partie gauche du substrat 4 ainsi fabriqué.

En parallèle, au début de la phase 82, lors d'une étape 116, le substrat 6 est fourni (figure 12). Ce substrat est également un substrat BSOI par exemple. Il comporte une couche 118 en silicium superposée sur une couche 120 d'isolant électrique, elle-même superposée sur un support 122. Les épaisseurs des couches 118, 120 et du support 122 sont par exemple comprises dans les mêmes plages que celles données pour le substrat 4 fourni lors de l'étape 86.

Lors d'une étape 124, une couche d'oxyde est déposée sur la couche 118 en silicium. Puis, on procède à une étape de lithogravure puis de gravure pour former la butée 58 (figure 13). Lors de cette étape 124, le procédé de gravure mis en oeuvre est par exemple le procédé RIE.

Lors d'une étape 128, un masque 130 (figure 14) est déposé sur la face inférieure du support 122. Pour obtenir ce masque, une couche d'oxyde est par exemple déposée selon le procédé PECVD puis on procède à des étapes de lithographie et de gravure pour former le masque 130. La gravure mise en oeuvre est par exemple une gravure RIE.

Lors d'une étape 132, une couche métallique 134 (figure 15) est déposée sur la couche 118. Par exemple, elle est déposée par le procédé connu sous l'acronyme PVD (Physical Vapor Deposition) ou par dépôt physique en phase vapeur. La couche métallique subit alors une étape de lithographie suivie d'une étape de gravure de cette couche métallique pour former la couche métallique 134 constituant l'essentiel de la face inférieure 12 du substrat 6.

Enfin, lors d'une étape 136, la membrane 44 est formée en gravant la face inférieure du substrat 6 à travers le masque 130 (figure 16). Lors de cette gravure, la couche 120 est utilisée comme couche d'arrêt.

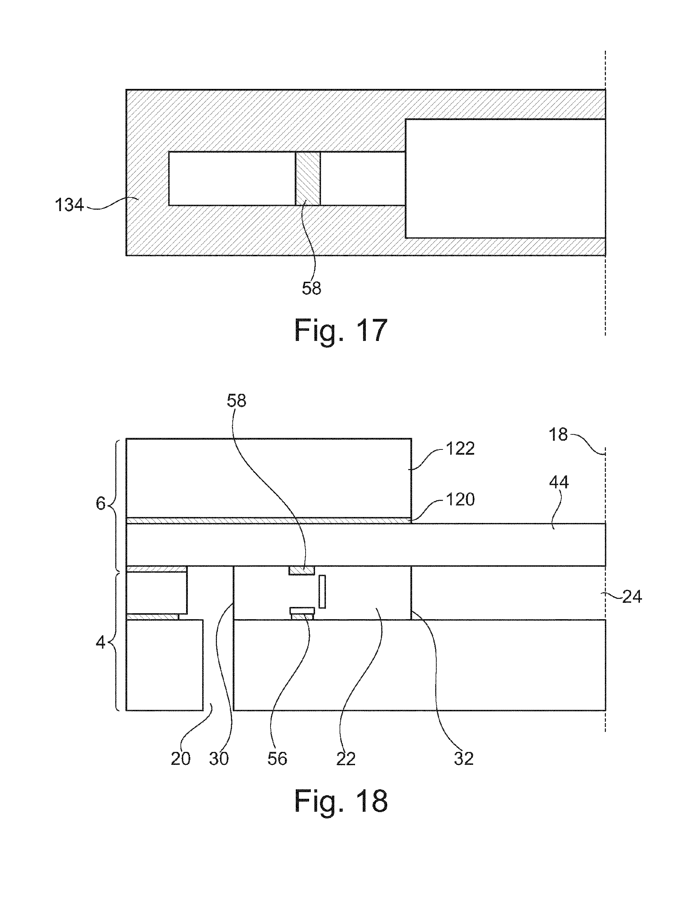

La figure 17 représente la face inférieure du substrat 6 obtenue à l'issue de la phase 82.

Ensuite, une fois que les substrats 4 et 6 ont été fabriqués, lors d'une étape 140, on procède au collage de la face supérieure 10 du substrat 4 sur la face inférieure 12 du substrat 6 (figure 18). On obtient alors la pompe 2.

De nombreux autres modes de réalisation sont possibles. Par exemple, différents types de substrat peuvent être utilisés tels que des substrats en silicium, en polysilicium, des substrats SOI (Silicon On Insulator), du verre, du plastique, des substrats en métal ou en polymère.

Dans un autre mode de réalisation, les canaux et la cavité ne sont pas creusés mais formés par dépôt de couches structurées successivement les unes au-dessus des autres.

En variante, la position d'aspiration de la membrane 42 ou, en alternance, sa position de refoulement peut être confondue avec la position de repos.

Dans un autre mode de réalisation, la pompe 2 comporte plusieurs membranes déformables. Par exemple, chacune de ces membranes déformables est associée à une cavité respective.

La cavité peut avoir la même section transversale que les canaux 22 et 26. Dans ce cas, la cavité ne se distingue des canaux que par le fait qu'elle est recouverte par la membrane mobile, ce qui n'est pas le cas des canaux.

Les canaux d'aspiration et de refoulement peuvent être du même côté de la chambre 24 et déboucher à l'intérieur de la chambre 24 dans une même paroi verticale.

Il n'est pas nécessaire que les canaux d'admission et de refoulement aient la même section transversale. Par exemple, le canal d'évacuation peut être plus profond et moins large que le canal d'admission.

L'orifice de sortie du canal d'admission et/ou l'orifice d'entrée du canal d'évacuation peuvent occuper toute la surface de la paroi latérale de la cavité dans laquelle ils débouchent. Dans ce cas, cette paroi latérale n'existe plus.

La pompe 2 peut également comporter plusieurs canaux d'admission et plusieurs canaux d'évacuation fluidiquement raccordés à la même chambre 24. Dans ce cas, chacun de ces canaux d'admission et d'évacuation comporte son propre clapet anti-retour.

L'épaulement sur lequel vient reposer le clapet anti-retour peut être obtenu en diminuant le diamètre du canal en amont du clapet. Dans ces conditions, la section transversale du canal sur toute sa longueur en amont du clapet est plus petite que la section transversale de ce même canal sur toute sa longueur en aval de ce même clapet.

En variante, le côté proximal du clapet est ancré sur le fond du canal et non pas sur l'une des parois verticales de ce canal.

Dans un autre mode de réalisation, le déplacement de chaque clapet est actionné par un actionneur électrique ou thermique. Par exemple, l'actionneur est basé sur un principe similaire à ceux mis en en oeuvre pour déplacer la membrane 44.

Dans un mode de réalisation simplifié, les épaulements sont omis. En effet, si le jeu entre la périphérie libre du clapet et les parois du canal est suffisamment réduit, cela conduit à avoir des fuites de liquide négligeables même en absence des épaulements.

La membrane déformable ne recouvre pas nécessairement l'ouverture de la cavité qui débouche dans la face supérieure 10. Par exemple, dans un autre mode de réalisation, la membrane est incorporée à l'une des parois verticales ou au fond de la cavité. Dans ce dernier cas, la membrane peut être réalisée dans le substrat 4 comme décrit dans l'article de Wijngaart Van Der W et Al introduit dans l'introduction de cette demande de brevet. Il est aussi possible de réaliser une membrane à la fois dans le premier substrat et une autre membrane dans le second substrat.

## Revendications

1. Pompe comportant :
- un premier substrat (4) s'étendant essentiellement dans un plan appelé « plan du substrat »,
- une cavité formée dans une face supérieure du premier substrat et délimitée sur les côtés par des parois latérales fixes (34, 40),
- des canaux (22, 26), d'admission et d'évacuation d'un fluide, formés dans la face supérieure du premier substrat, chacun de ces canaux s'étendant parallèlement au plan du substrat d'un orifice d'entrée (30, 36) jusqu'à un orifice (32, 38) de sortie, l'orifice (32) de sortie du canal d'admission et l'orifice (36) d'entrée du canal d'évacuation débouchant directement dans la cavité au niveau des parois latérales fixes (34, 40),
- un second substrat (6) collé sur la face supérieure du premier substrat et refermant la cavité pour former une chambre étanche (24) au fluide,
- une membrane (44) formant une paroi de la chambre étanche (24) au fluide, cette membrane étant déformable :
• d'une position d'aspiration jusqu'à une position de refoulement pour refouler le fluide à l'extérieur de la chambre par l'intermédiaire du canal d'évacuation, et
• de la position de refoulement jusqu'à la position d'aspiration pour aspirer le fluide à l'intérieur de la chambre par l'intermédiaire du canal d'admission,
- un premier et un second clapets anti-retours (50, 60) formés dans la face supérieure du premier substrat, chaque clapet anti-retour comportant un côté proximal ancré sans aucun degré de liberté au premier substrat,
**caractérisée en ce que** :
- le côté proximal du premier clapet (50) est situé entre les orifices d'entrée (30) et de sortie (32) du canal d'admission (22), et
- le côté proximal du second clapet (60) est situé entre les orifices d'entrée (36) et de sortie (38) du canal d'évacuation (26).

2. Pompe selon la revendication 1, dans laquelle :
- chaque clapet (50, 60) comporte une périphérie libre apte à se déplacer par rapport au premier substrat entre :
• une position ouverte dans laquelle le clapet laisse passer librement l'essentiel du fluide qui circule dans un sens allant du canal d'admission vers le canal d'évacuation, et
• une position fermée dans laquelle le clapet obstrue le passage du fluide en sens inverse,
- chaque canal comprend entre ses orifices d'entrée et de sortie, au moins un épaulement (54, 62) sur lequel vient reposer l'essentiel de la périphérie libre du clapet dans sa position fermée et duquel est éloignée cette périphérie libre du clapet dans sa position ouverte.

3. Pompe selon la revendication 2, dans laquelle la membrane (44) est une partie amincie du second substrat (6) collé sur la face supérieure du premier substrat (4), ce second substrat comportant par ailleurs une butée (58) en saillie sur sa face inférieure, cette butée formant au moins une partie de l'épaulement (54).

4. Pompe selon l'une quelconque des revendications précédentes, dans laquelle l'épaisseur du clapet (50, 60) est au moins cinq fois inférieure à sa largeur de manière à permettre le déplacement du clapet entre les positions ouverte et fermée par déformation élastique uniquement sous l'action d'une différence de pressions entre l'aval et l'amont de ce clapet.

5. Pompe selon l'une quelconque des revendications précédentes, dans laquelle l'orifice de sortie (32) du canal d'admission et l'orifice d'entrée (36) du canal d'évacuation sont situés, de chaque côté de la cavité, l'un en face de l'autre.

6. Pompe selon l'une quelconque des revendications précédentes, dans laquelle le côté proximal du clapet s'étend parallèlement ou perpendiculairement au plan du premier substrat.

7. Pompe selon l'une quelconque des revendications précédentes, dans laquelle la pompe comporte un actionneur (46) apte à convertir une énergie reçue en un déplacement de la membrane entre ses positions d'aspiration et de refoulement.

8. Pompe selon la revendication 7, dans laquelle :
- l'actionneur est intégré à la membrane et comporte au moins une couche déformable en réponse à l'énergie reçue, cette couche faisant partie de la membrane, ou alternativement,
- l'actionneur est distinct de la membrane et mécaniquement raccordé à la membrane par un élément mécanique d'accroche apte à transmettre une déformation de l'actionneur à la membrane.

9. Pompe selon l'une quelconque des revendications précédentes, dans laquelle la pompe comporte plusieurs exemplaires de la combinaison desdits cavité, canaux, membrane et clapets anti-retours.

10. Pompe selon l'une quelconque des revendications précédentes, dans laquelle la membrane (44) recouvre la totalité de la cavité.

11. Procédé de fabrication d'une pompe conforme à l'une quelconque des revendications précédentes, dans lequel le procédé comporte :
- la fourniture (86) d'un premier substrat s'étendant essentiellement dans un plan appelé « plan du substrat », ce premier substrat présentant une face supérieure,
- la formation (94 - 110) dans le premier substrat, à partir de sa face supérieure :
• d'une cavité délimitée par des parois latérales fixes,
• de canaux d'admission et d'évacuation, chacun de ces canaux s'étendant parallèlement au plan du premier substrat, d'un orifice d'entrée jusqu'à un orifice de sortie, l'orifice de sortie du canal d'admission et l'orifice d'entrée du canal d'évacuation débouchant directement dans la cavité au niveau des parois latérales fixes,
• d'un premier et d'un second clapets anti-retours, chaque clapet anti-retour comportant un côté proximal ancré sans aucun degré de liberté au premier substrat,
- le collage (140) d'un second substrat sur la face supérieure du premier substrat de manière à refermer la cavité pour former une chambre étanche au fluide,
- la formation (136) dans le premier et/ou le second substrat d'une membrane formant une paroi de la chambre étanche au fluide, cette membrane étant déformable :
• d'une position d'aspiration jusqu'à une position de refoulement pour refouler le fluide à l'extérieur de la chambre par l'intermédiaire du canal d'évacuation, et
• de la position de refoulement jusqu'à la position d'aspiration pour aspirer le fluide à l'intérieur de la chambre par l'intermédiaire du canal d'admission, **caractérisé en ce que** lors de la formation des premier et second clapets :
- le côté proximal du premier clapet est situé entre les orifices d'entrée et de sortie du canal d'admission, et
- le côté proximal du second clapet est situé entre les orifices d'entrée et de sortie du canal d'évacuation.

12. Procédé selon la revendication 11, dans lequel le procédé comprend la formation dans chaque canal, entre ses orifices d'entrée et de sortie, d'au moins un épaulement sur lequel vient reposer l'essentiel d'une périphérie libre du clapet anti-retour dans une position fermée et duquel est éloignée cette périphérie libre du clapet anti-retour dans une position ouverte, ledit épaulement étant formé en partie sur le premier substrat et en partie sur le second substrat, avant le collage desdits premier et second substrats.

13. Procédé selon l'une quelconque des revendications 11 à 12, dans lequel le procédé comprend la formation de la membrane dans le second substrat, cette membrane étant apte à refermer la cavité pour former la chambre étanche.
